# EUROPEAN PATENT APPLICATION

(11) **EP 3 888 964 A1**
(43) Date of publication of application: **06.10.2021**
(21) Application number: 19890217.3
(22) Date of filing: 27.11.2019
(51) Int. Cl.: B60K 11/02, B60H 1/06, B60L 58/24

(54) **VEHICLE THERMAL MANAGEMENT SYSTEM AND CONTROL METHOD THEREFOR, AND VEHICLE**

(30) Priority: 29.11.2018 CN 201811447896
(71) Applicant: BYD Company Limited, Guangdong 518118 (CN)
(72) Inventor: LIAN, Yubo, Shenzhen, Guangdong 518118 (CN); LING, Heping, Shenzhen, Guangdong 518118 (CN); WANG, Gang, Shenzhen, Guangdong 518118 (CN); CAI, Shuzhou, Shenzhen, Guangdong 518118 (CN); SONG, Gan, Shenzhen, Guangdong 518118 (CN)
(74) Representative: Haseltine Lake Kempner LLP
(86) International application number: PCT/CN2019/121339
(87) International publication number: WO 2020/108542

(57) **Abstract**

The present disclosure relates to a vehicle thermal management system, a control method thereof, and a vehicle using same. The vehicle thermal management system includes a battery and electric drive thermal management system. The battery and electric drive thermal management system includes a first coolant flow path, a second coolant flow path, and a four-way valve. A heat exchanger, a power battery, and a first pump are disposed on the first coolant flow path. The first coolant flow path has one end connected to a first port of the four-way valve and another end connected to a second port of the four-way valve. A motor, a radiator, and a second pump are disposed on the second coolant flow path. The second coolant flow path has one end connected to a third port of the four-way valve and another end connected to a fourth port of the four-way valve.

## Description

### CROSS-REFERENCE TO RELATED APPLICATIONS

The present disclosure is based upon and claims priority to Chinese Patent Application No. 201811447896.2, filed on November 29, 2018, which is incorporated herein by reference in its entirety.

### FIELD

The present disclosure relates to the field of vehicle thermal management technologies, and in particular, to a vehicle thermal management system, a vehicle having the vehicle thermal management system, and a method for controlling a vehicle thermal management system.

### BACKGROUND

A vehicle thermal management system includes three major systems: an air-conditioning system, a battery thermal management system, and an electric drive thermal management system. The existing electric drive thermal management system is independent of the air-conditioning system and the battery thermal management system. The heating of the battery mainly relies on a battery heater. Heat generated by the motor is dissipated by the radiator in the electric drive thermal management system, resulting in a waste of heat.

### SUMMARY

The present disclosure is to at least resolve one of the technical problems in the related art to some extent.

In view of this, a first objective of the present disclosure is to propose a vehicle thermal management system, which can use heat generated by the motor to heat the battery, thereby avoiding the waste of heat from the motor, optimizing the heat circulation mode of the vehicle thermal management system, and saving energy. In addition, the use of the heat generated by the motor to heat the battery eliminates the need for an additional battery heater, which simplifies the components of the vehicle thermal management system and reduces the costs of the vehicle thermal management system.

A second objective of the present disclosure is to provide a vehicle.

A third objective of the present disclosure is to propose a method for controlling a vehicle thermal management system.

To achieve the above objectives, an embodiment of a first aspect of the present disclosure proposes a vehicle thermal management system, including a battery and electric drive thermal management system. The battery and electric drive thermal management system includes a first coolant flow path, a second coolant flow path, and a four-way valve. A heat exchanger, a power battery, and a first pump are disposed on the first coolant flow path. The first coolant flow path has one end connected to a first port of the four-way valve and another end connected to a second port of the four-way valve. A motor, a radiator, and a second pump are disposed on the second coolant flow path. The second coolant flow path has one end connected to a third port of the four-way valve and another end connected to a fourth port of the four-way valve.

The vehicle thermal management system of this embodiment of the present disclosure includes a battery and electric drive thermal management system. The battery and electric drive thermal management system includes a first coolant flow path, a second coolant flow path, and a four-way valve. A heat exchanger, a power battery, and a first pump are disposed on the first coolant flow path. The first coolant flow path has one end connected to a first port of the four-way valve and another end connected to a second port of the four-way valve. A motor, a radiator, and a second pump are disposed on the second coolant flow path. The second coolant flow path has one end connected to a third port of the four-way valve and another end connected to a fourth port of the four-way valve. Whereby, the system can use heat generated by the motor to heat the battery, thereby avoiding the waste of heat from the motor, optimizing the heat circulation mode of the vehicle thermal management system, and saving energy. In addition, the use of the heat generated by the motor to heat the battery eliminates the need for an additional battery heater, which simplifies the components of the vehicle thermal management system and reduces the costs of the vehicle thermal management system.

To achieve the above objectives, an embodiment of a second aspect of the present disclosure proposes a vehicle, including a vehicle thermal management system according to the above embodiment.

By means of the above vehicle thermal management system, the vehicle of this embodiment of the present disclosure avoids the waste of heat from the motor, optimizes the heat circulation mode of the vehicle thermal management system, and saves energy. In addition, the use of the heat generated by the motor to heat the battery eliminates the need for an additional battery heater, which simplifies the components of the vehicle thermal management system and reduces the costs of the vehicle thermal management system.

To achieve the above objectives, an embodiment of a third aspect of the present disclosure proposes a method for controlling a vehicle thermal management system, applicable to the above vehicle thermal management system. The method includes the following steps: detecting a temperature of the power battery; detecting a temperature of a coolant in the second coolant flow path; and when the temperature of the power battery is less than a first battery temperature threshold and the temperature of the coolant in the second coolant flow path is greater than a first coolant temperature threshold, controlling the first port and the fourth port of the four-way valve to communicate with each other and the second port and the third port of the four-way valve to communicate with each other.

In the method for controlling a vehicle thermal management system according to the embodiments of the present disclosure, the temperature of the power battery and the temperature of the coolant in the second coolant flow path are detected, and when the temperature of the power battery is less than the first battery temperature threshold and the temperature of the coolant in the second coolant flow path is greater than the first coolant temperature threshold, the first port and the fourth port of the four-way valve are controlled to communicate with each other and the second port and the third port of the four-way valve are controlled to communicate with each other. Whereby, the method can use heat generated by the motor to heat the battery, thereby avoiding the waste of heat from the motor, optimizing the heat circulation mode of the vehicle thermal management system, and saving energy. In addition, the use of the heat generated by the motor to heat the battery eliminates the need for an additional battery heater, which simplifies the components of the vehicle thermal management system and reduces the costs of the vehicle thermal management system.

The additional aspects and advantages of the present disclosure will be provided in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the implementations with reference to the accompanying drawings, where:
FIG. 1 is a schematic structural diagram of a vehicle thermal management system according to Embodiment 1 of the present disclosure;
FIG. 2 is a schematic structural diagram of a vehicle thermal management system according to Embodiment 2 of the present disclosure;
FIG. 3 is a schematic structural diagram of a vehicle thermal management system according to Embodiment 3 of the present disclosure;
FIG. 4 is a schematic structural diagram of a vehicle thermal management system according to Embodiment 4 of the present disclosure;
FIG. 5 is a schematic structural diagram of a vehicle thermal management system according to Embodiment 5 of the present disclosure;
FIG. 6 is a schematic structural block diagram of a vehicle according to an embodiment of the present disclosure; and
FIG. 7 is a schematic flowchart of a method for controlling a vehicle thermal management system according to an embodiment of the present disclosure.

### List of reference numerals:

motor (1); radiator (2); three-way valve (3); first port (31) of three-way valve; second port (32) of three-way valve; third port (33) of three-way valve; four-way valve (4); first port (41) of four-way valve; second port (42) of four-way valve; third port (43) of four-way valve; fourth port (44) of four-way valve; heat exchanger (5); power battery (6); first pump (7); second pump (8); motor controller (9); DC-DC converter (10); compressor (11); condenser (12); second expansion valve (13); solenoid valve (14); first expansion valve (15); evaporator (16); blower (17); battery heater (18); first PTC heater (19); third pump (20); second PTC heater (21); warm air core (22); first air exhaust and coolant replenishing device (23); first three-way pipe (24); and second air exhaust and coolant replenishing device (25); second three-way pipe (26).

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are merely intended to explain the present disclosure and cannot be construed as a limitation to the present disclosure. On the contrary, the embodiments of the present disclosure include all changes, modifications, and equivalents falling within the spirit and scope of the appended claims.

In the present disclosure, unless otherwise stated, the directional terms such as "refrigerant inlet", "coolant inlet", "coolant outlet", and "coolant outlet" as used herein are generally relative to the flow direction of a fluid such as a refrigerant or coolant. Specifically, A port through which the fluid flows into a component of a vehicle thermal management system such as a condenser, battery, or evaporator, is a "refrigerant inlet" or "coolant inlet". A port through which the fluid flows out from a component of a vehicle thermal management system such as a condenser, battery, or evaporator, is a "refrigerant outlet" or "coolant outlet".

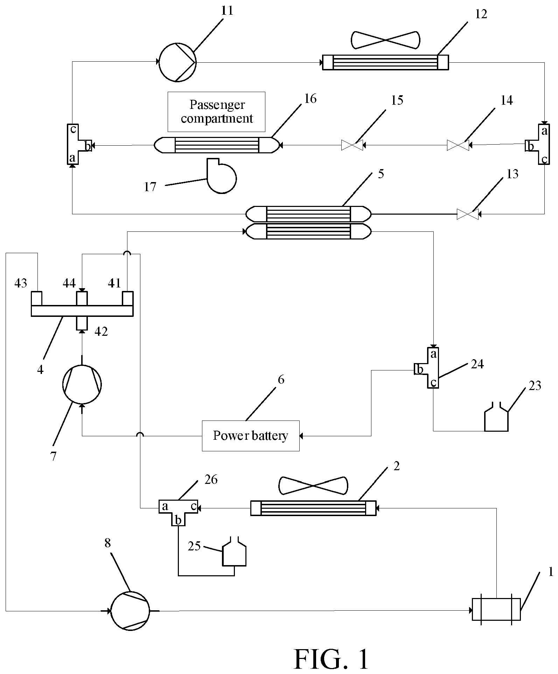

Referring to FIG. 1, a vehicle thermal management system according to Embodiment 1 of the present disclosure may include an air-conditioning system and a battery and electric drive thermal management system. In addition, the vehicle thermal management system may further include a heat exchanger 5. The heat exchanger 5 is disposed in the air-conditioning system and the battery and electric drive thermal management system at the same time, so that the air-conditioning system and the battery and electric drive thermal management system can exchange heat, to realize the cooling of the battery and electric drive thermal management system by the air-conditioning system. The battery and electric drive thermal management system includes a first coolant flow path, a second coolant flow path, and a four-way valve 4. The heat exchanger 5, a power battery 6, and a first pump 7 are disposed on the first coolant flow path. The first coolant flow path has one end connected to a first port 41 of the four-way valve 4 and another end connected to a second port 42 of the four-way valve 4. A motor 1, a radiator 2, and a second pump 8 are disposed on the second coolant flow path. The second coolant flow path has one end connected to a third port 43 of the four-way valve 4 and another end connected to a fourth port 44 of the four-way valve 4.

In this embodiment of the present disclosure, the four-way valve 4 can realize the connection or disconnection of the first coolant flow path to or from the second coolant flow path.

Specifically, when the first coolant flow path and the second coolant flow path need to be connected to use heat generated by the motor 1 to heat the power battery 6, the first port 41 and the fourth port 44 of the four-way valve 4 can be controlled to communicate with each other, and the second port 42 and the third port 43 of the four-way valve 4 can be controlled to communicate with each other, so that the first coolant flow path and the second coolant flow path are connected in series to form a loop, allowing a coolant to circulate in the first coolant flow path and the second coolant flow path. In this case, the heat generated by the motor 1 can be transferred to the first coolant flow path by the coolant in the second coolant flow path to heat the power battery 6, thereby avoiding the waste of heat from the motor 1, optimizing the heat circulation mode of the vehicle thermal management system, and saving energy. In addition, the use of the heat from the motor 1 to heat the power battery 6 eliminates the need for an additional battery heater, which simplifies the components of the vehicle thermal management system and reduces the costs of the vehicle thermal management system.

Moreover, when the first coolant flow path is connected to the second coolant flow path, the radiator 2 on the second coolant flow path may further be used to cool the power battery 6 and the motor 1. In this way, when the cooling demand of the power battery 6 is low, there is no need to use the air-conditioning system to cool the power battery 6, thereby saving energy.

Furthermore, specifically, when it is necessary to separately perform thermal management on the power battery 6 or the motor 1, the first coolant flow path may be disconnected from the second coolant flow path. Specifically, the first port 41 and the second port 42 of the four-way valve 4 may be controlled to communicate with each other, and the third port 43 and the fourth port 44 of the four-way valve 4 may be controlled to communicate with each other, so that the first coolant flow path and the second coolant flow path respectively form two loops independent of each other. In this way, according to actual needs, heating or cooling management for the power battery 6 and the motor 1 may be performed separately, which increases the diversity of working modes of the vehicle thermal management system for selection. The realization of the above-mentioned multiple working modes only requires control of the switching of the four-way valve, and does not need require provisioning of multiple complicated pipelines, thereby simplifying the control operation while reducing the costs.

As an optional arrangement of the present disclosure, as shown in FIG. 1, in the first coolant flow path, the first port 41 of the four-way valve 4 is connected to a coolant inlet of the heat exchanger 5, a coolant outlet of the heat exchanger 5 is connected to a coolant inlet of the power battery 6, a coolant outlet of the power battery 6 is connected to a coolant inlet of the first pump 7, and a coolant outlet of the first pump 7 is connected to the second port 42 of the four-way valve 4. In this way, by arranging the heat exchanger 5 upstream of the power battery 6, when the air-conditioning system is used to cool the power battery 6, the coolant flowing from the coolant outlet of the heat exchanger 5 can immediately cool the power battery 6, which improves the effect of cooling the power battery 6.

Further, as shown in FIG. 1, in the second coolant flow path, the third port 43 of the four-way valve 4 is connected to a coolant inlet of the second pump 8, a coolant outlet of the second pump 8 is connected to a coolant inlet of the motor 1, a coolant outlet of the motor 1 is connected to a coolant inlet of the radiator 2, and a coolant outlet of the radiator 2 is connected to the fourth port 44 of the four-way valve 4. Similarly, by arranging the radiator 2 downstream of the motor 1, the coolant flowing from the coolant outlet of the motor 1 can be cooled by the radiator 2, and when the cooled coolant flows into the first coolant flow path to cool the power battery 6, the effect of cooling the power battery 6 can be improved.

Optionally, in the battery and electric drive thermal management system, a first air exhaust and coolant replenishing device 23 and a second air exhaust and coolant replenishing device 25 may further be provided. The first air exhaust and coolant replenishing device 23 is bypassed in the first coolant flow path through a third port c of a first three-way pipe 24, and the second air exhaust and coolant replenishing device 25 is bypassed in the second coolant flow path through a second port b of a second three-way pipe 26. It should be noted that a hydraulic check valve and a pressure gauge may further be installed in series on an outlet pipe connected between the air exhaust and coolant replenishing device and the three-way pipe. Before the system works, the coolant is replenished fill and air is exhausted, to ensure that air in the coolant is all drained. Meanwhile the pressure gauge displays a pressure of the system. When the pressure does not meet the requirements, the air exhaust and coolant replenishing device may compensate for the coolant loss caused by leakage and evaporation during operation.

The air-conditioning system provided in Embodiment 1 of the present disclosure includes a refrigerant trunk, a first refrigerant branch, and a second refrigerant branch. The first refrigerant branch is connected in parallel with the second refrigerant branch. A compressor 11 and a condenser 12 are disposed on the refrigerant trunk. A first expansion valve 15 and an evaporator 16 are disposed on the first refrigerant branch. A second expansion valve 13 and the heat exchanger 5 are disposed on the second refrigerant branch. A blower 17 is further arranged near the evaporator 16, to blow air to the evaporator 16 and blow cold energy generated by the evaporator 16 into a passenger compartment to realize the refrigeration of the passenger compartment. It should be noted that the evaporator 16 is a type of heat exchanger, and its main function is for the refrigerant to absorb heat and evaporate therein. Therefore, the evaporator 16 will generate or output cold energy. The cold energy herein may refer to a total energy value of heat in the passenger compartment that is taken away by the evaporator 19 through refrigeration in a unit time or a period of time.

The first expansion valve 15 may be a thermal expansion valve, which is configured to adjust a flow rate in the first refrigerant branch. When the first expansion valve 15 is a thermal expansion valve, it is also necessary to dispose a solenoid valve 14 for blocking a flow on the first refrigerant branch to cooperate with the first expansion valve 15, in order to control the opening and closing of the first refrigerant branch. The second expansion valve 13 may be an electronic expansion valve, which is configured to block a flow and adjust the flow rate, so as to control the opening and closing of or the flow rate in the second refrigerant branch. In other embodiments, the first expansion valve 15 may also be an electronic expansion valve.

As an optional arrangement of the present disclosure, as shown in FIG. 1, in the air-conditioning system, a refrigerant outlet of the compressor 11 communicates with a refrigerant inlet of the condenser 12, a refrigerant outlet of the condenser 12 communicates with a refrigerant inlet of the solenoid valve 14 and a refrigerant inlet of the second expansion valve 13 respectively, a refrigerant outlet of the solenoid valve 14 communicates with a refrigerant inlet of the first expansion valve 15, a refrigerant outlet of the first expansion valve 15 communicates with a refrigerant inlet of the evaporator 16, a refrigerant outlet of the second expansion valve 13 communicates with a refrigerant inlet of the heat exchanger 5, and a refrigerant outlet of the evaporator 16 and a refrigerant outlet of the heat exchanger 5 both communicate with a refrigerant inlet of the compressor 11. In this way, when it is necessary to use the air-conditioning system to cool the power battery 6 and/or the motor 1, cold energy in the air-conditioning system can be transferred to the battery and electric drive thermal management system through the heat exchanger 5.

Specifically, when the passenger compartment requires refrigeration, the solenoid valve 14 and the first expansion valve 15 are opened, so that the refrigerant flows through the first refrigerant branch, and provides refrigeration for the passenger compartment through the evaporator 16. When the air-conditioning system is used to cool the power battery 6, the second expansion valve 13 is opened, so that the refrigerant flows through the second refrigerant branch and exchanges heat through the heat exchanger 5 to cool the coolant in the first coolant flow path, thereby realizing the cooling of the power battery 6. When the power battery 6 needs to be cooled while the passenger compartment requires refrigeration, the opening degree of the second expansion valve 13 may be adjusted to adjust the flow rate of the refrigerant in the first refrigerant branch and the flow rate of the refrigerant in the second refrigerant branch respectively, so as to distribute cold energy of the air-conditioning system. For example, when it is necessary to give priority to meeting the refrigeration demand of the passenger compartment, the opening degree of the second expansion valve 13 may be decreased, so that more cold energy is distributed to the passenger compartment.

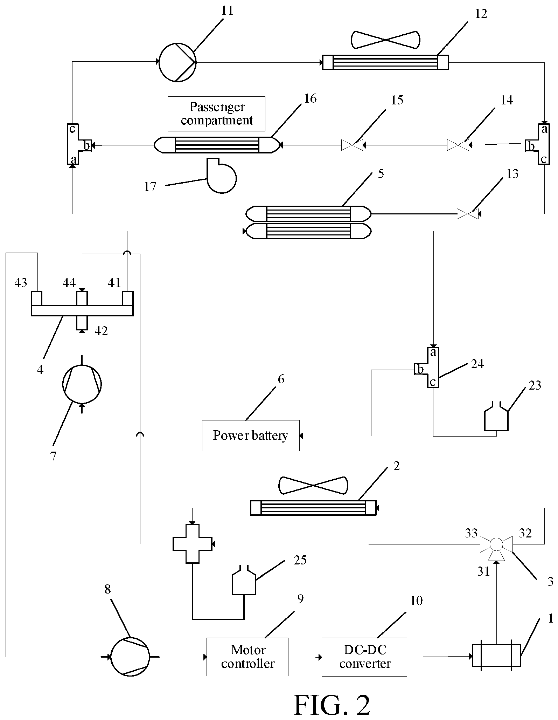

As another implementation, referring to FIG. 2, the following content is added to Embodiment 2 of the present disclosure on the basis of Embodiment 1: an electronic control unit and a three-way valve 3 are further disposed on the second coolant flow path. The electronic control unit includes a motor controller 9 and a direct current-direct current (DC-DC) converter 10.

Specifically, the second coolant flow path includes a coolant trunk, a first coolant branch, and a second coolant branch, the second pump 8, the motor controller 9, the DC-DC converter 10, and the motor 1 are disposed on the coolant trunk, the radiator 2 is disposed on the first coolant branch, the second coolant branch is a short-circuit branch, and the coolant trunk has one end connected to the third port 43 of the four-way valve 4 and an other end selectively connected to the fourth port 44 of the four-way valve 4 through the first coolant branch or the second coolant branch. When the vehicle is in a high-power charging mode, the electronic control unit also generates much heat during operation. By disposing the electronic control unit on the coolant trunk, the heat generated by the electronic control unit may also be used to heat the power battery 6. In addition, the electronic control unit and the motor 1 are connected in series on the coolant trunk, so that when heat dissipation is performed for the motor 1, heat of the electronic control unit can also be dissipated, which eliminates the need for providing an additional radiator for the electronic control unit, thereby reducing the costs.

When the heat of the motor 1 is used to heat the power battery 6, the coolant trunk is connected to the fourth port 44 of the four-way valve 4 through the second coolant branch. In this case, the coolant does not pass through the radiator 2, and the heat generated by the motor 1 is directly transferred to the first coolant flow path through the second coolant branch, without passing through the radiator 2 during the transfer process. Therefore, the additional heat loss caused by the coolant flowing through the radiator 2 can be avoided, thereby increasing the efficiency of heating the power battery 6 by the motor 1. When the radiator 2 is used to cool the motor 1 and the power battery 6, the coolant trunk is connected to the fourth port 44 of the four-way valve 4 through the first coolant branch. In this case, the radiator 2 can be used to dissipate heat from the motor 1 and the power battery 6.

In order to simplify the components of the vehicle thermal management system, as shown in FIG. 2, a three-way valve 3 is further disposed on the second coolant flow path, a first port 31 of the three-way valve 3 is connected to the coolant trunk, a second port 32 of the three-way valve 3 is connected to the first coolant branch, and a third port 33 of the three-way valve 3 is connected to the second coolant branch. In some other implementations, the coolant trunk may also be connected to the first coolant branch and the second coolant branch through a three-way pipe respectively, and the first coolant branch and the second coolant branch are each provided with a solenoid valve thereon.

Specifically, as an optional arrangement of the present disclosure, as shown in FIG. 2, in the second coolant flow path, the third port 43 of the four-way valve 4 is connected to the coolant inlet of the second pump 8, the coolant outlet of the second pump 8 is connected to a coolant inlet of the motor controller 9, a coolant outlet of the motor controller 9 is connected to a coolant inlet of the DC-DC converter 10, a coolant outlet of the DC-DC converter 10 is connected to the coolant inlet of the motor 1, the coolant outlet of the motor 1 is connected to the first port 31 of the three-way valve 3, the second port 32 of the three-way valve 3 is connected to the coolant inlet of the radiator 2, and the third port 33 of the three-way valve 3 and the coolant outlet of the radiator 2 are both connected to the fourth port 44 of the four-way valve 4. Because the radiator 2 is connected in series on the first coolant branch, the coolant trunk is directly connected to the four-way valve 4 through the second coolant branch by only communicating the first port 31 and the third port 33 of the three-way valve 3, so that the coolant does not flow through the radiator 2, so as to prevent the radiator 2 from consuming the heat generated by the motor 1 and the electronic control unit.

It should be noted that in Embodiment 2, the second air exhaust and coolant replenishing device 25 is bypassed in the second coolant flow path through a four-way pipe.

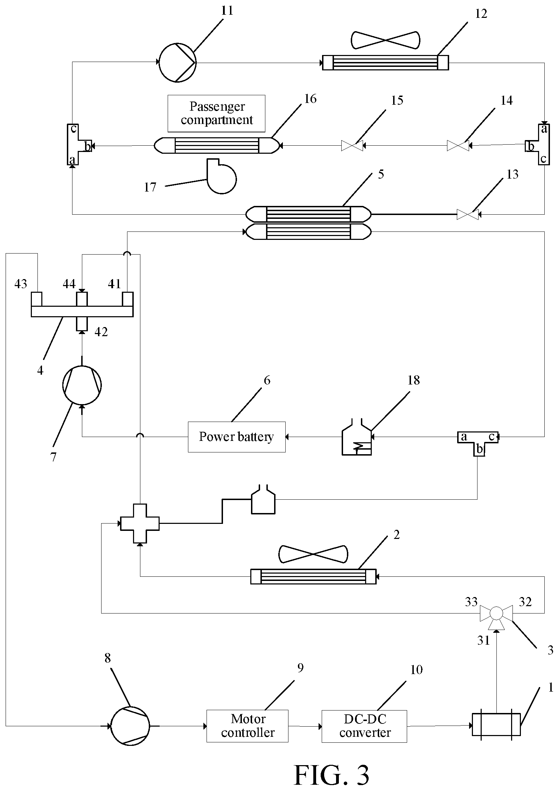

As another implementation, referring to FIG. 3, the following content is added to Embodiment 3 of the present disclosure on the basis of Embodiment 2: a battery heater 18 is further disposed on the first coolant flow path. Optionally, the battery heater 18 may be connected in series between the power battery 6 and the heat exchanger 5. When the heat generated by the motor 1 cannot meet the heating demand of the power battery 6, the first port 41 and the second port 42 of the four-way valve 4 may be communicated with each other and the third port 43 and the fourth port 44 may be communicated with each other so that the first coolant flow path becomes an independent loop, and the battery heater 18 is turned on to heat the power battery 6.

In addition, in Embodiment 3 of the present disclosure, the first coolant flow path and the second coolant flow path may share a same exhaust gas replenishing device.

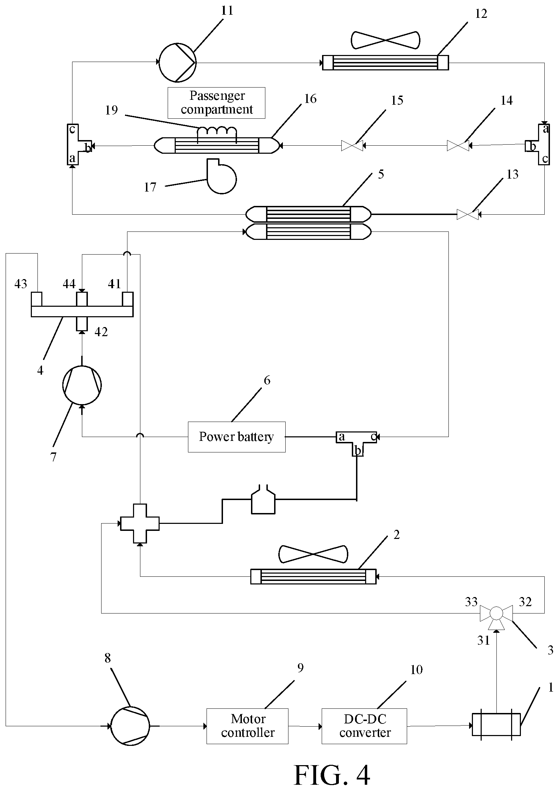

As another implementation, referring to FIG. 4, the following content is added to Embodiment 4 of the present disclosure on the basis of Embodiment 2: the air-conditioning system further includes a first positive temperature coefficient (PTC) heater 19. The first PTC heater 19 may be arranged in parallel with the evaporator 16 and share the blower 17 with the evaporator 16. The first PTC heater 19 is configured to heat air blown from the blower 17, and the blower 17 blows the heated warm air into the passenger compartment, to realize the heating of the passenger compartment.

In addition, in Embodiment 4 of the present disclosure, the first coolant flow path and the second coolant flow path may share a same exhaust gas replenishing device.

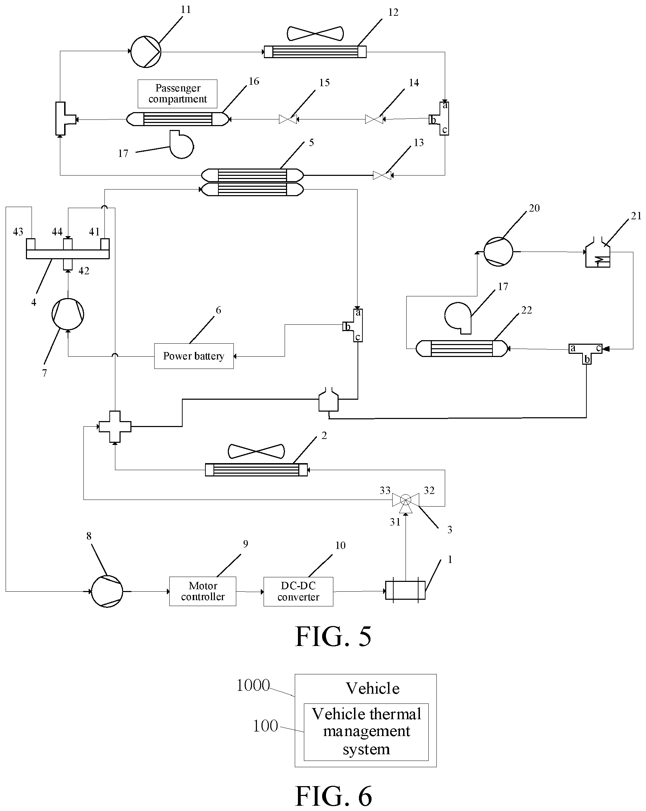

As another implementation, referring to FIG. 5, the following content is added to Embodiment 5 of the present disclosure on the basis of Embodiment 2: the air-conditioning system may further include a third pump 20, a second PTC heater 21, and a warm air core 22. The warm air core may be a device similar to a radiator, and is mainly configured to provide heating for the interior of the vehicle. In an embodiment of this application, the third pump 20, the second PTC heater 21, and the warm air core 22 are connected in series to form a loop. As an optional arrangement, as shown in FIG. 5, a coolant outlet of the third pump 20 is connected to a coolant inlet of the second PTC heater 21, a coolant outlet of the second PTC heater 21 is connected to a coolant inlet of the warm air core 22, and a coolant outlet of the warm air core 22 is connected to a coolant inlet of the third pump 20.

The above loop is arranged in the air-conditioning system, where the warm air core 22 is arranged in parallel with the evaporator 16 in the air-conditioning system, and shares the blower 17 with the evaporator 16. The blower 17 is configured to blow air to the evaporator 16 and the warm air core 22. After the second PTC heater 21 heats the warm air core 22, the blower 17 blows heat of the warm air core 22 into the passenger compartment to realize the heating of the passenger compartment.

In addition, in Embodiment 5 of the present disclosure, the first coolant flow path, the second coolant flow path, and the loop in which the warm air core 22 is located may share a same exhaust gas replenishing device.

FIG. 6 is a schematic block diagram of a vehicle according to an embodiment of the present disclosure. In an embodiment of the present disclosure, the vehicle may be a pure electric vehicle or a hybrid vehicle, which is not limited in the present disclosure.

As shown in FIG. 6, a vehicle 1000 according to an embodiment of the present disclosure includes a vehicle thermal management system 100 according to the above embodiment.

By means of the above vehicle thermal management system, the vehicle of this embodiment of the present disclosure avoids the waste of heat from the motor, optimizes the heat circulation mode of the vehicle thermal management system, and saves energy. In addition, the use of the heat generated by the motor to heat the battery eliminates the need for an additional battery heater, which simplifies the components of the vehicle thermal management system and reduces the costs of the vehicle thermal management system.

For the vehicle thermal management system provided in Embodiment 1 to Embodiment 5 of the present disclosure, when the power battery 6 has a heating demand, the motor 1 can be used to heat the power battery 6. To be specific, the first coolant flow path is connected to the second coolant flow path, so that the coolant in the second coolant flow path flows into the first coolant flow path, and the power battery 6 is heated by the heat generated by the motor 1.

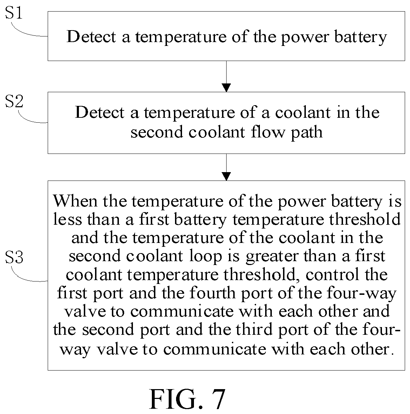

For example, when the vehicle is in an initial electrically-driven working state, the temperature of the power battery 6 is low and the power battery 6 has a heating demand, as shown in FIG. 7, the following control method is adopted:
S1, detecting a temperature of the power battery;
S2, detecting a temperature of the coolant in the second coolant flow path; and
S3, when the temperature of the power battery is less than a first battery temperature threshold and the temperature of the coolant in the second coolant flow path is greater than a first coolant temperature threshold, controlling the first port and the fourth port of the four-way valve to communicate with each other and the second port and the third port of the four-way valve to communicate with each other.

Specifically, first, the temperature of the power battery 6 and the temperature of the coolant in the second coolant flow path are detected; when the temperature of the power battery 6 is less than the first battery temperature threshold and the temperature of the coolant in the second coolant flow path is greater than the first coolant temperature threshold, that is to say, when the temperature of the coolant in the second coolant flow path reaches a temperature for heating the power battery 6, referring to the vehicle thermal management system provided in Embodiment 2, as shown in FIG. 2, the first port 41 and the fourth port 44 of the four-way valve 4 are controlled to communicate with each other, and the second port 42 and the third port 43 of the four-way valve 4 are controlled to communicate with each other. In this case, the flow route of the coolant is: the first pump 7 → the second port 42 and the third port 43 of the four-way valve 4 → the second pump 8 → the motor controller 9 → the DC-DC converter 10 → the motor 1 → the first port 31 and the third port 33 of the three-way valve 3 → the fourth port 44 and the first port 41 of the four-way valve 4 → the heat exchanger 5 → the power battery 6 → the first pump 7. In this way, the coolant in the second coolant flow path flows into the first coolant flow path through the four-way valve 4 to realize the heating of the power battery 6.

When the heat of the motor 1 is used to heat the power battery 6, the following solution is adopted in order to reduce the heat loss in the second coolant flow path and maximize the use of the heat generated by the motor 1 to heat the power battery 6. In Embodiment 2 shown in FIG. 2, when the temperature of the power battery 6 is less than the first battery temperature threshold and the temperature of the coolant in the second coolant flow path is greater than the first coolant temperature threshold, the first port 41 and the fourth port 44 of the four-way valve 4 are controlled to communicate with each other, the second port 42 and the third port 43 of the four-way valve 4 are controlled to communicate with each other, and the first port 31 and the third port 33 of the three-way valve 3 are also controlled to communicate with each other. In this way, the heat generated by the motor 1 is directly transferred to the first coolant flow path through the second coolant branch, without passing through the radiator 2 during the transfer process. Therefore, the additional heat loss caused by the coolant flowing through the radiator 2 can be avoided, thereby increasing the efficiency of heating the power battery 6 by the motor 1.

It should be noted that in the case where the heat of the motor 1 is used to heat the power battery 6, when the temperature of the power battery 6 is less than the first battery temperature threshold and the temperature of the coolant in the second coolant flow path is not greater than the first coolant temperature threshold, that is to say, when the power battery 6 has a heating demand but the temperature of the coolant in the second coolant flow path does not meet the heating demand for the power battery 6, the coolant in the second coolant flow path is not directly introduced into the first coolant flow path, and the coolant in the second coolant flow path may be preheated first. Specifically, referring to the vehicle thermal management system provided in Embodiment 2, as shown in FIG. 2, the third port 43 and the fourth port 44 of the four-way valve 4 may be controlled to communicate with each other, so that the second coolant flow path forms an independent loop which is not in communication with the first coolant flow path, and the first port 31 and the third port 33 of the three-way valve 3 are communicated with each other, so that the coolant does not flow through the radiator 2. In this case, the flow route of the coolant is: the second pump 8 → the motor controller 9 → the DC-DC converter 10 → the motor 1 → the first port 31 and the third port 33 of the three-way valve 3 → the fourth port 44 and the third port 43 of the four-way valve 4 → the second pump 8. In this way, the coolant in the second coolant flow path circulates in the coolant trunk and the second coolant branch. The heat generated by the motor 1 gradually increases the temperature of the coolant in the second coolant flow path. When the temperature is greater than the first coolant temperature threshold, the ports of the four-way valve 4 are switched, that is, the first port 41 and the fourth port 44 of the four-way valve 4 are controlled to communicate with each other, and the second port 42 and the third port 43 of the four-way valve 4 are connected to communicate with each other, so that the coolant in the second coolant flow path flows into the first coolant flow path, to realize the heating of the power battery 6 by the motor 1.

In addition, when the vehicle is in the electrically-drive working state as described above, the temperature of the power battery 6 is low and the power battery 6 has a heating demand, in the embodiment shown in FIG. 3, the battery heater 18 located on the first coolant flow path may also be used to heat the power battery 6, in addition to using the heat generated by the motor 1 to heat the power battery 6. In this case, the first port 41 and the second port 42 of the four-way valve 4 may be controlled to communicate with each other, and the flow route of the coolant is: the first pump 7 → the second port 42 and the first port 41 of the four-way valve 4 → the heat exchanger 5 → the battery heater 18 → the power battery 6 → the first pump 7. In this way, the first coolant flow path forms an independent loop, and the battery heater 18 heats the coolant in the first coolant flow path, to realize the heating of the power battery 6 by the battery heater 18.

It should be noted that the above-mentioned first battery temperature threshold and first coolant temperature threshold may be set according to actual requirements, which is not limited in the present disclosure.

In the present disclosure, for example, when the vehicle is in the electrically-driven working state, the temperature of the power battery 6 is relatively high and the power battery 6 has a cooling demand, the radiator 2 in the second coolant flow path may be used to cool the power battery 6 or the air-conditioning system may be used to cool the power battery 6. The cooling process is as follows:
First, an outdoor ambient temperature and the temperature of the power battery 6 are detected. When the temperature of the power battery 6 is greater than a second battery temperature threshold and the outdoor ambient temperature is less than an outdoor ambient temperature threshold, that is to say, when the power battery 6 needs to be cooled and the ambient temperature outside the vehicle is low, the first port 41 and the fourth port 44 of the four-way valve 4 may be controlled to communicate with each other, the second port 42 and the third port 43 of the four-way valve 4 may be controlled to communicate with each other, and the first port 31 and the second port 32 of the three-way valve 3 may be controlled to communicate with each other, so as to communicate the first coolant flow path with the second coolant flow path. In this way, the coolant sequentially flows through the first pump 7 → the second port 42 and the third port 43 of the four-way valve 4 → the second pump 8 → the motor controller 9 → the DC-DC converter 10 → the motor 1 → the first port 31 and the second port 32 of the three-way valve 3 →the radiator 2 → the fourth port 44 and the first port 41 of the four-way valve 4 → the heat exchanger 5 → the power battery 6 → the first pump 7. In this case, because the temperature of the external environment is low, the cooling demand of the power battery 6 can be met by using the radiator 2 to exchange heat with the external environment.

The above-mentioned control method for cooling the power battery 6 by the radiator 2 is suitable for situations where the ambient temperature is low. If the radiator 2 is used to cool the power battery 6 in such situations where the ambient temperature is low, but the temperature of the power battery 6 still cannot meet the requirements, the air-conditioning system may be used to assist in cooling the power battery 6 through the heat exchanger 5, that is to say, the cooling of the power battery 6 is realized through the cooperation of the air-conditioning system and the radiator 2.

It should be noted that the second battery temperature threshold is greater than the first battery temperature threshold. The second battery temperature threshold and the outdoor ambient temperature threshold may also be set according to specific situations, and may be any appropriate value, which is not limited in the present disclosure.

When the detected outdoor ambient temperature and the detected temperature of the power battery 6 meet the condition that the temperature of the power battery 6 is greater than the second battery temperature threshold and the outdoor ambient temperature is not less than the outdoor ambient temperature threshold, the first port 41 and the second port 42 of the four-way valve 4 may be controlled. In this case, the flow route of the coolant is: the first pump 7 → the second port 42 and the third port 43 of the four-way valve 4 → the heat exchanger 5 → the power battery 6 → the first pump 7. In addition, the air-conditioning system is controlled to operate so that the refrigerant in the air-conditioning system flows through the heat exchanger 5. In this case, the flow route of the refrigerant is: the compressor 11 → the condenser 12 → the second expansion valve 13 → the heat exchanger 5 → the compressor 11, so that the coolant in the first coolant flow path is cooled by the heat exchanger 5, thereby cooling the power battery 6. In this case, by controlling the first port 41 and the second port 42 of the four-way valve 4 to communicate with each other, the first coolant flow path forms an independent loop. In this way, the air-conditioning system cools only the power battery 6 and not the motor 1, thereby preventing the motor 1 from consuming the cold energy of the air-conditioning system.

In the present disclosure, a thermal management control method for the motor 1 includes a control method for cooling the motor 1. When the motor 1 has a cooling demand, the radiator 2 may be used to cool the motor 1 or the air-conditioning system may be used to cool the motor 1.

When the radiator 2 is used to cool the motor 1, the specific process is as follows: First, a temperature of the motor 1 and the temperature of the coolant in the second coolant flow path are detected. When the temperature of the coolant in the second coolant flow path is greater than the first coolant temperature threshold and less than a second coolant temperature threshold and the temperature of the motor 1 is less than a motor temperature threshold, that is to say, when the coolant in the second coolant flow path has a cooling demand and the cooling demand of the motor 1 is low, the third port 43 and the fourth port 44 of the four-way valve 4 may be controlled to communicate with each other, and the first port 31 and the second port 32 of the three-way valve 3 may be controlled to communicate with each other. In this case, the flow route of the coolant is: the second pump 8 → the motor controller 9 → the DC-DC converter 10 → the motor 1 → the first port 31 and the second port 32 of the three-way valve 3 → the radiator 2 → the fourth port 44 and the third port 43 of the four-way valve 4 → the second pump 8. In this way, the coolant in the second coolant flow path will circulate in the coolant trunk and the first coolant branch, and the coolant in the second coolant flow path and the motor 1 are cooled by the radiator 2.

When the temperature of the coolant in the second coolant flow path is not less than the second coolant temperature threshold or the temperature of the motor 1 is not less than the motor temperature threshold, that is to say, when the cooling demand of the motor 1 is high and the radiator 2 alone cannot meet the cooling demand of the motor 1, the air-conditioning system and the radiator 2 may be used in combination to cool the motor 1. To be specific, the first port 41 and the fourth port 44 of the four-way valve 4 may be controlled to communicate with each other, the second port 42 and the third port 43 of the four-way valve 4 may be controlled to communicate with each other, and the first port 31 and the second port 32 of the three-way valve 3 may be controlled to communicate with each other. In this case, the flow route of the coolant is: the first pump 7 → the second port 42 and the third port 43 of the four-way valve 4 → the second pump 8 → the motor controller 9 → the DC-DC converter 10 → the motor 1 → the first port 31 and the second port 32 of the three-way valve 3 →the radiator 2 → the fourth port 44 and the first port 41 of the four-way valve 4 → the heat exchanger 5 → the power battery 6 → the first pump 7. In addition, the air-conditioning system is controlled to operate so that the refrigerant in the air-conditioning system flows through the heat exchanger 5. In this case, the flow route of the refrigerant is: the compressor 11 → the condenser 12 → the second expansion valve 13 → the heat exchanger 5 → the compressor 11. In this way, the cooling demand of the motor 1 can be met through the cooperation of the air-conditioning system and the radiator 2.

In addition, the vehicle thermal management system provided in the embodiments of the present disclosure can not only perform thermal management on the power battery 6 and the motor 1, but also can cool and heat the passenger compartment to provide a comfortable driving environment for the driver. Specifically, when the passenger compartment requires refrigeration, the solenoid valve 14 and the first expansion valve 15 are opened, so that the refrigerant flows through the first refrigerant branch, and provides refrigeration for the passenger compartment through the evaporator 16. In this case, the flow route of the refrigerant is: the compressor 11 → the condenser 12 → the solenoid valve 14 → the first expansion valve 15 → the heat exchanger 5 → the compressor 11.

It should be noted that, when the power battery 6 needs to be cooled while the passenger compartment requires refrigeration, the opening degree of the second expansion valve 13 may be adjusted to adjust the flow rate of the refrigerant in the first refrigerant branch and the flow rate of the refrigerant in the second refrigerant branch respectively, so as to distribute cold energy of the air-conditioning system. A specific control method is as follows: First, an indoor target ambient temperature set by a user is received, and the indoor ambient temperature is detected. When the temperature of the power battery 6 is greater than the second battery temperature threshold, the outdoor ambient temperature is not less than the outdoor ambient temperature threshold, and the indoor ambient temperature is greater than the indoor target ambient temperature, the air-conditioning system is controlled to operate so that a refrigerant in the air-conditioning system flows through the evaporator 16 and the heat exchanger 5. If the indoor ambient temperature is still greater than the indoor target ambient temperature after the air-conditioning system operates for a preset period of time, the opening degree of the second expansion valve 13 is adjusted considering that the cooling demand of the passenger compartment prevails, to reduce a flow rate of the refrigerant flowing through the heat exchanger 5 and increase a flow rate of the refrigerant flowing through the evaporator 16.

When the passenger compartment requires heating, referring to the vehicle thermal management system provided in Embodiment 4 shown in FIG. 4, the first PTC heater 19 may be turned on to heat the air blown from the blower 17 so that the blower 17 blows the heated warm air into the passenger compartment, to realize the heating of the passenger compartment.

Alternatively, when the passenger compartment requires heating, referring to the vehicle thermal management system provided in Embodiment 5 shown in FIG. 5, the blower 17, the third pump 20, and the second PTC heater 21 are turned on, so that the coolant circulates in the loop formed by the third pump 20, the second PTC heater 21, and the warm air core 22 connected in series. The flow route of the coolant is: the third pump 20 → the second PTC heater 21 → the warm air core 22. The coolant is heated by the second PTC heater 21 and then flows into the warm air core 22, and the blower 17 can blow the hot air on the warm air core 22 into the passenger compartment to heat the passenger compartment.

In the method for controlling a vehicle thermal management system according to the embodiments of the present disclosure, the temperature of the power battery and the temperature of the coolant in the second coolant flow path are detected, and when the temperature of the power battery is less than the first battery temperature threshold and the temperature of the coolant in the second coolant flow path is greater than the first coolant temperature threshold, the first port and the fourth port of the four-way valve are controlled to communicate with each other and the second port and the third port of the four-way valve are controlled to communicate with each other. Whereby, the method can use heat generated by the motor to heat the battery, thereby avoiding the waste of heat from the motor, optimizing the heat circulation mode of the vehicle thermal management system, and saving energy. In addition, the use of the heat generated by the motor to heat the battery eliminates the need for an additional battery heater, which simplifies the components of the vehicle thermal management system and reduces the costs of the vehicle thermal management system.

The exemplary implementations of the present disclosure are described in detail above with reference to the accompanying drawings. However, the present disclosure is not limited to the specific details in the foregoing implementations, a plurality of simple deformations may be made to the technical solution of the present disclosure within a range of the technical concept of the present disclosure, and these simple deformations fall within the protection scope of the present disclosure.

It should be additionally noted that, the specific technical features described in the foregoing specific implementations may be combined in any proper manner in a case without conflict. To avoid unnecessary repetition, various possible combination manners are not described in the present disclosure.

In addition, different implementations of the present disclosure may also be arbitrarily combined without departing from the idea of the present disclosure, and these combinations shall still be regarded as content disclosed in the present disclosure. It should be noted that in the description of the present disclosure, the terms "first", "second", and the like are merely used for description, and shall not be understood as an indication or implication of relative importance. In addition, in the description of the present disclosure, unless otherwise stated, "a plurality of" means two or more than two.

In the descriptions of this specification, descriptions such as reference terms "an embodiment", "some embodiments", "example", "specific example", or "some examples" intend to indicate that specific features, structures, materials, or characteristics described with reference to embodiments or examples are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A vehicle thermal management system, comprising a battery and electric drive thermal management system, wherein the battery and electric drive thermal management system comprises a first coolant flow path, a second coolant flow path, and a four-way valve, wherein
a heat exchanger, a power battery, and a first pump are disposed on the first coolant flow path, and the first coolant flow path has one end connected to a first port of the four-way valve and another end connected to a second port of the four-way valve; and
a motor, a radiator, and a second pump are disposed on the second coolant flow path, and the second coolant flow path has one end connected to a third port of the four-way valve and an other end connected to a fourth port of the four-way valve.

2. The vehicle thermal management system according to claim 1, wherein an electronic control unit is further disposed on the second coolant flow path.

3. The vehicle thermal management system according to claim 2, wherein the second coolant flow path comprises a coolant trunk, a first coolant branch, and a second coolant branch, the second pump, the electronic control unit, and the motor are disposed on the coolant trunk, the radiator is disposed on the first coolant branch, the second coolant branch is a short-circuit branch, and the coolant trunk has one end connected to the third port of the four-way valve and an other end selectively connected to the fourth port of the four-way valve through the first coolant branch or the second coolant branch.

4. The vehicle thermal management system according to claim 3, wherein a three-way valve is further disposed on the second coolant flow path, a first port of the three-way valve is connected to the coolant trunk, a second port of the three-way valve is connected to the first coolant branch, and a third port of the three-way valve is connected to the second coolant branch.

5. The vehicle thermal management system according to any one of claims 1-4, wherein a coolant inlet of the heat exchanger is connected to the first port of the four-way valve, a coolant outlet of the heat exchanger is connected to a coolant inlet of the power battery, a coolant outlet of the power battery is connected to a coolant inlet of the first pump, and a coolant outlet of the first pump is connected to the second port of the four-way valve.

6. The vehicle thermal management system according to claim 4, wherein the third port of the four-way valve is connected to a coolant inlet of the second pump, a coolant outlet of the second pump is connected to a coolant inlet of the electronic control unit, a coolant outlet of the electronic control unit is connected to a coolant inlet of the motor, and a coolant outlet of the motor is connected to the first port of the three-way valve.

7. The vehicle thermal management system according to any one of claims 1-6, wherein a battery heater is further disposed on the first coolant flow path.

8. The vehicle thermal management system according to any one of claims 1-7, wherein the vehicle thermal management system further comprises an air-conditioning system, and the heat exchanger is disposed in the air-conditioning system and the battery and electric drive thermal management system at the same time.

9. The vehicle thermal management system according to claim 8, wherein the air-conditioning system comprises a refrigerant trunk, a first refrigerant branch, and a second refrigerant branch, the first refrigerant branch is connected in parallel with the second refrigerant branch, a compressor and a condenser are disposed on the refrigerant trunk, a first expansion valve and an evaporator are disposed on the first refrigerant branch, and a second expansion valve and the heat exchanger are disposed on the second refrigerant branch.

10. The vehicle thermal management system according to claim 9, wherein the air-conditioning system further comprises a blower and a first positive temperature coefficient (PTC) heater, the blower is configured to blow air to the evaporator, and the first PTC heater is used to heat the air blown by the blower.

11. The vehicle thermal management system according to claim 9, wherein the air-conditioning system further comprises a blower, a third pump, a second PTC heater, and a warm air core, the third pump, the second PTC heater, and the warm air core are connected in series to form a loop, and the blower is configured to blow air to the evaporator and the warm air core.

12. A vehicle, comprising a vehicle thermal management system according to any one of claims 1-11.

13. A method for controlling a vehicle thermal management system, applicable to a vehicle thermal management system according to any one of claims 1-11, the method comprising:
detecting a temperature of the power battery;
detecting a temperature of a coolant in the second coolant flow path; and
when the temperature of the power battery is less than a first battery temperature threshold and the temperature of the coolant in the second coolant flow path is greater than a first coolant temperature threshold, controlling the first port and the fourth port of the four-way valve to communicate with each other and the second port and the third port of the four-way valve to communicate with each other.

14. The method for controlling a vehicle thermal management system according to claim 13, wherein the method is applied to the vehicle thermal management system according to claim 4, and the method comprises:
when the temperature of the power battery is less than the first battery temperature threshold and the temperature of the coolant in the second coolant flow path is greater than the first coolant temperature threshold, controlling the first port and the fourth port of the four-way valve to communicate with each other, the second port and the third port of the four-way valve to communicate with each other, and the first port and the third port of the three-way valve to communicate with each other.

15. The method for controlling a vehicle thermal management system according to claim 14, wherein the method further comprises:
when the temperature of the power battery is less than the first battery temperature threshold and the temperature of the coolant in the second coolant flow path is not greater than the first coolant temperature threshold, controlling the third port and the fourth port of the four-way valve to communicate with each other and the first port and the third port of the three-way valve to communicate with each other.

16. The method for controlling a vehicle thermal management system according to claim 13 or 14, wherein the method further comprises:
detecting an outdoor ambient temperature; and
when the temperature of the power battery is greater than a second battery temperature threshold and the outdoor ambient temperature is less than an outdoor ambient temperature threshold, controlling the first port and the fourth port of the four-way valve to communicate with each other, the second port and the third port of the four-way valve to communicate with each other, and the first port and the second port of the three-way valve to communicate with each other,
wherein the second battery temperature threshold is greater than the first battery temperature threshold.

17. The method for controlling a vehicle thermal management system according to claim 13 or 14, wherein the method further comprises:
detecting an outdoor ambient temperature; and
when the temperature of the power battery is greater than a second battery temperature threshold and the outdoor ambient temperature is not less than an outdoor ambient temperature threshold, controlling the first port and the second port of the four-way valve to communicate with each other, and controlling the air-conditioning system to operate so that a refrigerant in the air-conditioning system flows through the heat exchanger.

18. The method for controlling a vehicle thermal management system according to claim 13, wherein the method is applied to the vehicle thermal management system according to claim 9, and the method further comprises:
receiving an indoor target ambient temperature set by a user;
detecting an indoor ambient temperature; and
when the temperature of the power battery is greater than a second battery temperature threshold, the outdoor ambient temperature is not less than an outdoor ambient temperature threshold, and the indoor ambient temperature is greater than the indoor target ambient temperature, controlling the air-conditioning system to operate so that a refrigerant in the air-conditioning system flows through the evaporator and the heat exchanger; and
if the indoor ambient temperature is still greater than the indoor target ambient temperature after the air-conditioning system operates for a preset period of time, reducing a flow rate of the refrigerant flowing through the heat exchanger and increasing a flow rate of the refrigerant flowing through the evaporator.

19. The method for controlling a vehicle thermal management system according to claim 14, wherein the method further comprises:
detecting a temperature of the motor; and
when the temperature of the coolant in the second coolant flow path is greater than the first coolant temperature threshold and less than a second coolant temperature threshold, and the temperature of the motor is less than a motor temperature threshold, controlling the third port and the fourth port of the four-way valve to communicate with each other and the first port and the second port of the three-way valve to communicate with each other.

20. The method for controlling a vehicle thermal management system according to claim 19, wherein the method further comprises:
when the temperature of the coolant in the second coolant flow path is not less than the second coolant temperature threshold or the temperature of the motor is not less than the motor temperature threshold, controlling the first port and the fourth port of the four-way valve to communicate with each other, the second port and the third port of the four-way valve to communicate with each other, and the first port and the second port of the three-way valve to communicate with each other, and controlling the air-conditioning system to operate so that a refrigerant in the air-conditioning system flows through the heat exchanger.
